# EUROPEAN PATENT SPECIFICATION

(11) **EP 1 332 294 B1**
(45) Date of publication and mention of the grant of the patent: **03.05.2006**
(21) Application number: 01972839.3
(22) Date of filing: 28.09.2001
(51) Int. Cl.: F16B 41/00, F21V 15/00

(54) **FASTENING DEVICE**
BEFESTIGUNGSVORRICHTUNG
DISPOSITIF D'ATTACHE

(30) Priority: 04.10.2000 SE 0003567
(43) Date of publication of application: 06.08.2003
(73) Proprietor: Nilsson, Hans, 593 92 Västervik (SE)
(72) Inventor: Nilsson, Hans, 593 92 Västervik (SE)
(74) Representative: Mossmark, Anders Lennart
(86) International application number: PCT/SE2001/002093
(87) International publication number: WO 2002/029264

(56) References cited:
- FR-A1- 2 643 954
- US-A- 1 530 521
- US-A- 1 604 690
- US-A- 1 635 228
- US-A- 1 937 848
- US-A- 4 336 698
- US-A- 4 710 082

## Description

### AREA OF THE INVENTION

The present invention relates to fastening devices for holding together two components of a structure. More particularly, the invention relates to such fastening devices that can be blocked against disassembly, or render disassembly considerably more difficult, of closed structures, such as doors and covers of box-like structures where the contents need to be accessible, for e.g. maintenance or other reasons, by a certified service mechanic, but should not be accessible for a that part of the general public that cannot leave things alone, for reasons of dangerous voltage, integrity protection or the like.

### BACKGROUND OF THE INVENTION

One example of such structures is tube-shaped lampposts with a street light at the top, where the electrical cable runs through the post and where a fuse, typically of the normal plug type, is located inside a service cover on the post, commonly about one meter above ground level. The fuse needs to be accessible for exchange, which is normally arranged by removing the cover after loosening two screws attaching the cover to the tubular post. The screws are loosened with a conventional screwdriver, and then the common household type fuse holder is directly accessible.

Regrettably, it has proven common that some people, which cannot leave things alone, for obscure reasons quite often open these service covers, unscrew the fuse holder and fuse and throw them away, causing the street light to go out. This may as such cause large inconveniences, but what is worse, will leave an unprotected electrical conduit, carrying a voltage of at least 220 V, open and easily accessible for children and others that might not realise the danger. Municipalities and other institutions each year pay large sums on sending out electricians to mount new fuses and/or covers. There have been efforts into reducing this problem by converting to less common screws with heads for hexagon socket, phillips or torx type wrenches or screwdrivers, but this has not helped either. Hitherto, no practical and sufficiently cheap and handy solution has been found.

### STATE OF THE ART

There are in existence a number of solutions to the problem of rendering the contents of a closed box structure, or the like, difficult or impossible to access for unauthorised people. For example, there are locks of various kinds, everything from padlocks to code locks and other integral lock designs requiring different kinds of more or less advanced keys to be opened. One example of common key type locks are the locks commonly provided on control cubicles etc., where a tool similar to a box spanner of a special type is required for turning a triangular stud located in a cylindrical recess in the exterior of the cover. This type of lock is however not very difficult to open using simple standard tools.

One example of a known locking device for locking a screw union, requiring a common type key for opening the union, is described in U.S. Patent No. 4,710,082. This document shows a sealed housing containing a cylinder type lock, locking or releasing a nut inside the housing, whereby the housing may rotate without causing the nut to rotate and the screw head is inaccessible. This design has the drawback, however, of being rather large and expensive, as quality cylinder locks are expensive components.

EP-0 065 694 illustrates a device being locked with a sealing band and a closing stamp. This design consists of a plurality of special components and, furthermore, requires re-sealing each time it is opened. The design will work well in many contexts but does not fit all needs.

Thefts of car wheels are common; thus there are many types of protective devices against unauthorised removing of rim nuts or screws. F-2 784 330 and USA-4,336,698 exhibit examples of relatively complicated and very specialised solutions to exactly this problem. However, these solutions are not generally applicable, a/o for reasons of cost.

F-2 643 954 shows an arrangement locking a screw and a nut together so as not to allow them to turn in relation to each other after tightening, as a locking device that, during tightening, retains the nut in an enclosed space, is then released and forced by a spring into a position where it does not lock the nut. The nut may then rotate with the screw, making it difficult to dismantle the joint from the outside. The idea is of course based on that the relative turning resistance between the screw and the nut, due to frictional and geometrical relationships, is higher than between the nut and the base it rests upon, something that according to the illustrated embodiment is secured by means of a slide washer underneath the nut. According to this patent document, the locking device can be made to re-lock the nut against rotation, either through the insertion of compressed air that overcomes the bias from the spring and brings the locking device into its locked position, or with a special screwdriver equipped with a thin driftpin, inserted through a central hole in the screw to be unscrewed from the nut and displacing, by an axially inward-directed force, the locking device to a locked position. However, this device is relatively easy to open, for the person who can't leave things alone, using a nail of adapted length inserted through the hole, together with a standard screwdriver pushing on the nail and simultaneously turning the screw. This document describes the state of the art according to the preamble of claim 1.

### SUMMARY OF THE INVENTION

Thus, it is an object of the present invention to provide an improved fastening device for holding together two components of an arbitrarily shaped, closed structure, the fastening device comprising a male fastening element, which may be, but not necessarily is, a threaded screw, and a female fastening element, which may be, but not necessarily is, a threaded nut. The male and the female elements fit into each other for creating a union through relative motion between the male and the female element, for example, but not limited to, a rotary movement. The male element is easily accessible from the outside, typically by means of a tool, with the intention to join or dismantle the union between the male and female elements, whilst the female component is inaccessibly located inside the closed structure. If the female element is not locked in position by an also internally located locking arrangement, it will be free to move together with the male element. The frictional and geometrical relations are arranged in such a manner that the resistance against relative movement between the male and the female components is higher than between the female element, or that component into which it is attached or integrated, and the stationary portion of the locking arrangement, when the position locking device is unlocked, thereby preventing the union to be dismantled or joined. Said locking arrangement is locked/unlocked through an external influence.

The invention is characterised by said external influence being a rotational movement, by means of a second tool, of a component within said locking arrangement, thereby either causing a locking stud of a latch bolt within the locking arrangement to be displaced so as to engage a locking recess in a stationary component, preventing said locking arrangement and its attached or integrated female element to further follow the movement of the male element, or causing said locking stud to be displaced out of said engagement, depending on the direction of rotation, said component in the locking arrangement is located out of sight and difficult to access inside a small hole in the closed structure.

### BRIEF DESCRIPTION OF THE DRAWINGS

- Fig. 1: shows a longitudinal cross-section through a first preferred embodiment of the fastening device according to the invention, fitted into a tubular closed structure;

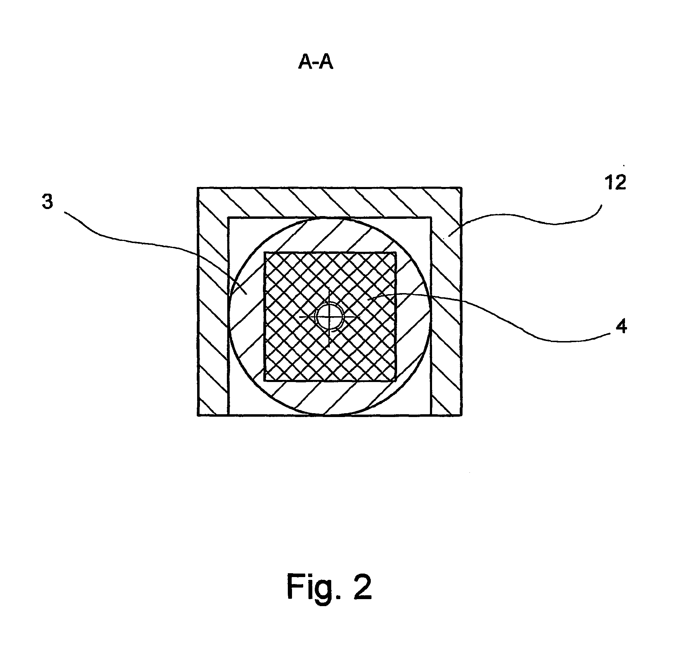

- Fig. 2: shows a lateral cross-section through the device according to Fig. 1, seen along the line A-A, illustrating a preferred, shape-locking embodiment of the locking plunge;
- Fig. 3: shows a longitudinal cross-section through a second preferred embodiment of the fastening device according to the invention; and
- Fig. 4: shows an enlarged, schematic cross-section with insert washers fitted, and a top view of insert washers having differently shaped, central apertures for specially shaped screwdriver shafts.

### DETAILED DESCRIPTION OF PREFERRED EMBODIMENTS

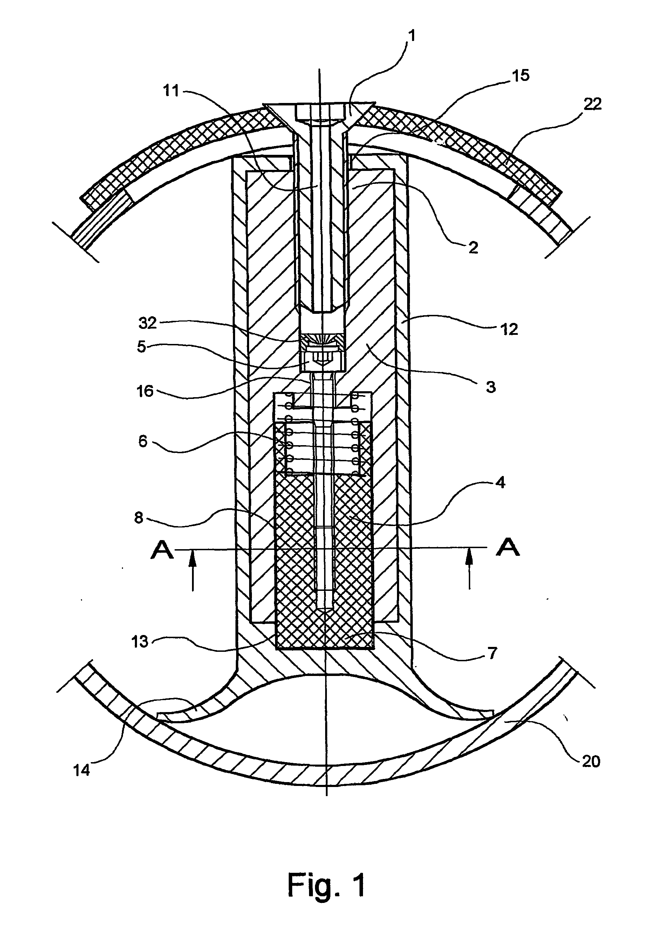

Fig. 1 shows a longitudinal cross-section along the centreline of a first preferred embodiment of the present invention, arranged inside a tubular, closed structure 20, for example such a lamppost as was discussed initially, for holding a service cover 22 in place on said lamppost. In conventional embodiments of such structures, the cover is held in place by e.g. two screws, one at the top edge and one at the bottom edge of the cover. The screws may then be threaded directly into each one welded stud in the wall of the tube, or into a nut fastened at the corresponding location on the inside of the tube. As the person skilled in the art appreciates, only a screwdriver or similar, with a blade corresponding to the recess in the head of the screw (slot, hexagon socket, phillips, torx, etc), is necessary in order to easily remove the cover.

The fastening device according to the invention, on the other hand, is effectively blocked against unauthorised removal of the cover. Said device consists of a male element in the form of a screw 1 with an arbitrary head (slot, hexagon socket, phillips, torx, etc), and in the illustrated embodiment of a female element 2 integrated with a locking arrangement 3, 4, 5, 6, 13. The person skilled in the art easily appreciates that the female element 2, in the illustrated example consisting of a thread in the end wall of one end 2 of the cartridge 3, could just as well be a separate standard nut 2, locked by virtue of its shape against rotation through axial insertion into a mating hole in said cartridge 3, and locked against axial motion through engagement directly against the tube 20, or against the separate exterior casing 12 shown in the embodiment. The female element 2 could also be embodied like a unitary component, fitting locked against rotation in the cartridge 3, that could be provided with threads of several different dimensions for the screw 1, as needed This of course applies also when the female element 2 is integrated directly into the cartridge 3. In the embodiment of the cartridge 3 and the exterior casing 12 described below, a standard threaded screw 1 and nut/cartridge 2, 3 are often sufficient to provide a higher turning resistance between screw and nut/cartridge, than between nut/cartridge and exterior casing. Should this not be enough, e.g. if the design is made without a separate exterior casing and one cannot have as good control of the frictional conditions between the nut/cartridge and the fixed body of the closed structure, a screw with a friction-increasing plastic plug or a nut with a friction-increasing plastic ring (so-called nyloc, etc) could be used in order to increase, in an as such known manner, the friction between the male element and the female element.

The cartridge 3 has a cylindrical exterior and relatively glossy envelope and end surfaces, and is inserted into a box-like exterior casing 12 having relatively glossy internal surfaces, so as to be allowed to turn about its centreline with low friction. The exterior casing, with its relatively glossy internal surfaces, is on the other hand externally adapted in such a way that it cannot rotate inside the closed structure. In the illustrated embodiment, the exterior casing 12 has the shape of an externally substantially square box that may have a (not shown) larger extension along the longitudinal axis of the tube it is inserted into than the illustrated lateral width, or may be shaped, in any other way, so that it cannot rotate once it has been placed in its illustrated position inside the tube 20. In order to be secured firmly in place after insertion, the exterior casing 12 according to the example is provided with two resilient, fin-like support legs 14 that will clamp the exterior casing diametrically inside the tube, so that it can simply be squeezed into place.

The box-like exterior casing 12 is furthermore provided with a hole in each end surface thereof. The holes are, in the illustrated embodiment, located so that their centrelines coincide with the longitudinal centreline of the cylindrical cartridge 3 when the cartridge has been inserted in place at the bottom of the box-like exterior casing 12. In the top end surface in the figure, there is a circular hole 15 with a somewhat larger diameter than that of the screw 1, allowing the screw to be fitted into the thread of the nut portion 2. In the bottom end surface in the illustration there is a hole or recess 13 having the same general shape as the lower stud portion 7 of the latch bolt 4 that is received in a rotationally locked manner in the cartridge 3. In the illustrated embodiment, the locking stud 7 and the recess 13 both have a square cross-section, the recess having somewhat longer square sides than the stud 7, allowing the stud to slide easily in and out of the recess 13 when the relative rotational positions thereof are correct. Other centrally located rotation-locking recess and stud shapes are of course conceivable, such as other polygons, splines or the like.

In another conceivable embodiment (not shown), the stud 7 as well as the recess 13 are located eccentrically in relation to the centreline of the cartridge 3. In such an embodiment, when inserted into the recess 13, the stud 7 will lock the cartridge 3 against rotation even if its cross-section is circular, eliminating the need for a non-circular (shape-locking) design of the locking stud 7 and the locking hole or recess 13.

In a third conceivable embodiment (not shown), the locking stud 7 extends radially instead of axially from the cartridge 3 and will in this manner provide the required rotational locking through extending into a likewise radially located recess in the exterior casing 12.

The hole 13 is, in the illustrated embodiment, shown as a recess having a bottom, but it should be evident that the hole could just as well be a through hole in the exterior casing 12. It is also easily understood that the locking device could be embodied without the exterior casing 12, whereby the support devices for the cartridge 3, with the corresponding holes 13 and 15 would be integrated directly into the closed structure. Then of course, the hole 13 must not be accessible from the exterior.

The latch bolt 4 is, as discussed above, is received in a rotationally locked manner in an internal hole 8 in the cartridge 3. When using a centrally located latch bolt, said bolt may be arranged in the same manner as the locking arrangement between the centrally located locking stud 7 and the recess 13 according to the description above, whereby the latch bolt 4 and its locking stud 7 preferably would have the same cross-section shape, even if different cross-section shapes are conceivable. For a non-centrally or radially extending latch bolt 4, said bolt naturally does not have to be rotationally locked, through its shape, in the cartridge 3. The combination of a centrally located latch bolt 4, shape-locked in the cartridge 3 and having an eccentrically located locking stud 7 without requirement for shape-locking in the recess 13, or vice versa, is of course conceivable.

The position and movement of the latch bolt is, in the illustrated, preferred embodiment example influenced by on the one hand a compression spring 6, on the other a locking screw 5. The spring 6 is biasing the latch bolt 4 towards its locking position inside the locking recess 13, whereas it is possible, through tightening of the locking screw 5, to pull the latch bolt 4 back into the cartridge 3, thereby pulling the locking stud 7 out from its locking position inside the locking recess 13.

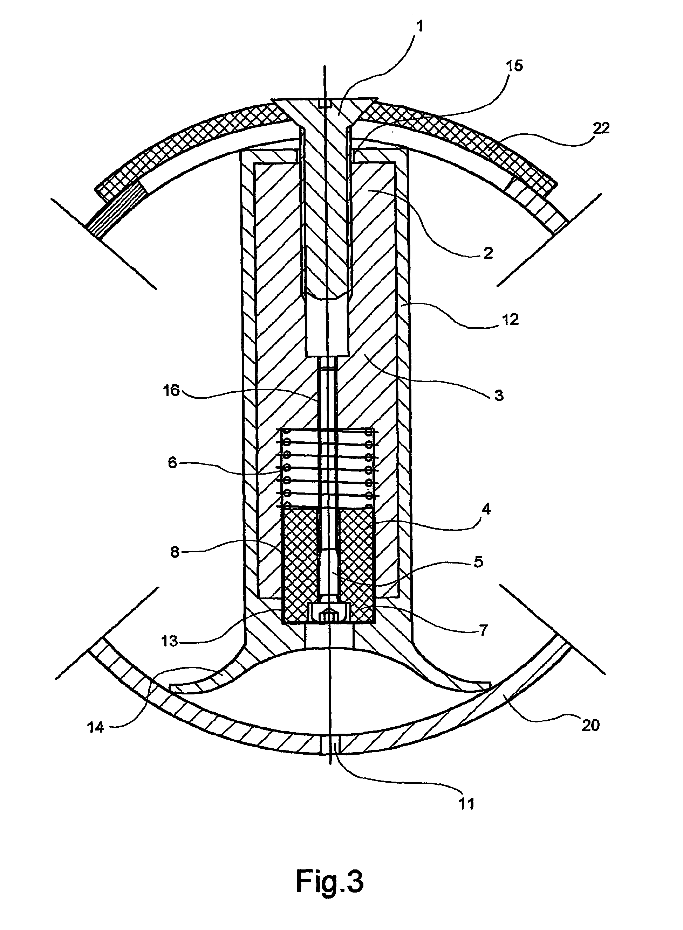

The locking screw 5 is accessed by inserting a specially shaped tool, resembling a screwdriver, through the hole 11, which in the illustrated embodiment is provided along the centreline of the cartridge 3 and the screw 1, through the screw 1. It is of course entirely conceivable to arrange the hole 11 on the diametrically opposite, other side of the closed structure and to place, with the illustrated spring location according to Fig. 1, the screw head inside the locking stud 7, with a through hole in the latch bolt 4 and a threaded hole 16 in the cartridge 3. Fig. 3 shows an example of such an embodiment

In order to avoid misconceptions regarding descriptions of tools similar to a screwdriver in the below description, the following terminology will be used for the various parts of a screwdriver or of a tool resembling a screwdriver. 'Blade' signifies the tip of the tool that is inserted into the recess of the screw head, be it a slot, a hexagon socket, phillips or torx or any other form of recess. 'Shaft' signifies the rod of typically circular or square cross-section that connects the blade with the handle. 'Handle' is of course the part used for applying turning torque to the tool. The term screwdriver, in this context, will also cover special tools such as tool bits made for manual tightening or for motor-powered tightening tools, long shaft hexagon socket head or torx spanners, etc.

The function of the locking arrangement according to the illustrated first embodiment of the present invention is as follows:

The exterior casing 12 in the illustrated embodiment example is adapted for quick and simple retrofitting into standardised tubular lampposts of a type commonly used on the market, and where the cover may have been vandalised and the original fastening devices have been destroyed. In the post remains only the service aperture, and above and below there is each one through screw hole intended for retaining the cover. As the exterior casing is designed with a suitable length to fit diametrically inside the tubular post, the serviceman needs only to push in a fastening device in its exterior casing 12 into the post and align it with each through screw hole, replace the old cover or fit a new one, insert a screw 1 into each hole, tighten it up in the nut/locking arrangement and then lock the device in a manner to be described below.

The fastening device is thus preassembled so that all included components except the screw 1 are fitted into the exterior casing 12, in the locked position shown in Fig. 1, whereupon the whole assembly is pushed into place, aligned with the existing holes in the existing tubular structure 20. Then the cover 22 is aligned in place, and a screw 1 is inserted into each screw hole and is threaded tightly into the integral nut 2/cartridge 3 of the locking arrangement. This is enabled because the latch bolt 4 is locked against rotation in the cartridge 3, and the square locking stud 7 is received in the square locking recess 13, which in turn is locked against rotation, via the exterior casing 12, inside the tube 20 and cannot rotate about the centreline of the screw and the cartridge. The screw 1 that, according to the above description, may have one of several known shapes of its torque-transferring recess (slot, hexagon socket, phillips, torx or another form of recess) is tightened to a suitable torque by means of an appropriately designed first tool, a screwdriver blade, which could belong to a conventional screwdriver, could be a so-called standardised 'bit' fitted in a motor-powered tightening tool, or similar. Subsequently, a small screwdriver blade, attached to a shaft, with a blade and shaft diameter adapted to the hole 11 and of sufficient length to reach into the head of the locking screw 5, is inserted through the hole 11 and the locking screw 5 is rotated, usually in the clockwise direction if it is a right-threaded standard screw, which is preferred. As the locking screw is tightened up, the latch bolt 4 is pulled upwards in the illustration, further into the hole 8, and the locking stud 7 is pulled out from the locking recess 13. This entails that the cartridge 3, complete with its integrated or rotationally locked nut 2, is no longer locked against rotation inside the exterior casing 12, i.e. inside the closed structure 20. As the friction between the nut/cartridge 2, 3 and the exterior casing 12, as discussed above, is arranged to be lower than that between the screw 1 and the nut/cartridge 2, 3, the nut/cartridge 2, 3 will, if any unauthorised person tries to undo the screw 1 using a suitable first tool, be rotated together with the screw 1, thereby making it impossible to undo the threaded union and remove the screw 1.

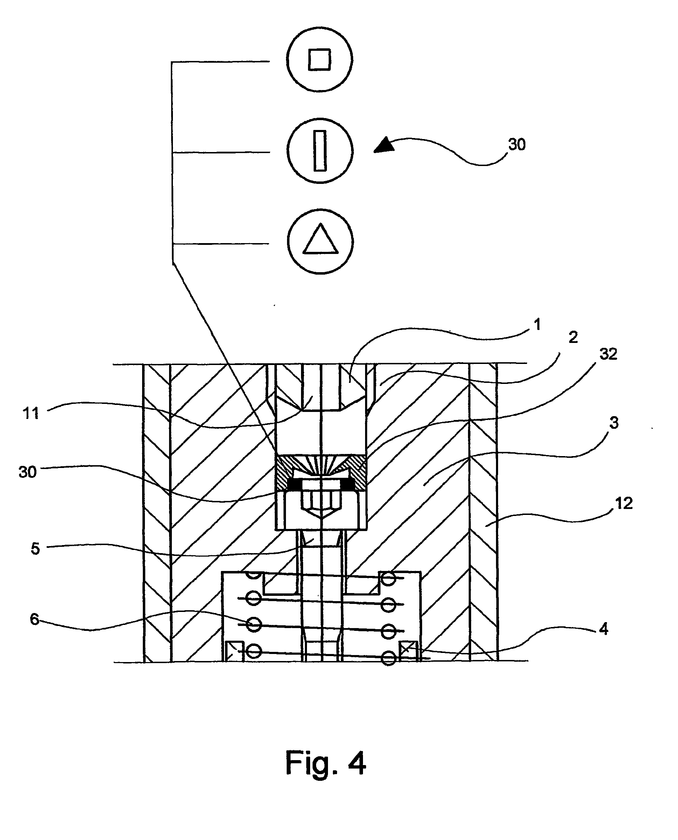

The security against unauthorised disassembly may, if necessary, be further enhanced through designing the hole 11 with a smaller diameter in relation to the size of the blade than that of commercially available standard screwdrivers, that would otherwise define a second tool fitting the head of the locking screw 5. Furthermore, the shaft could be made with a greater length than that of a standard screwdriver. Another alternative for obstructing unauthorised dismounting would be to place a rotatable washer 30, having a specially shaped central aperture, inside the hole in the cartridge 3, between the screw 1 and the head of the locking screw 5. See Fig. 4. This aperture must be passed by the blade of the screwdriver and possibly a forward portion of its shaft, which must then be provided with a cross-section size and shape corresponding to the washer aperture in order to pass therethrough for the blade to reach the head of the locking screw 5. A further security enhancement would be to provide an observation protection inside the hole 11 by means of e.g. a kind of washer 32 provided with resilient, wire-like portions extending toward the centre of the aperture of this washer, thus blocking the view towards the screw head, preventing an unauthorised person from seeing what type of screw head the locking screw 5 has. Combinations of these alternatives are of course also conceivable. Examples of the principle design of the two washers 30 and 32 are shown in Fig. 4, which is, however, schematic. The relative size and the exact position between the screws 1 and 5 may be varied, and the aperture shape must of course be adapted to the shape of the head/tool recess of the screw 5.

The service mechanic authorised to open the cover 22 of the closed structure 20 can, however, easily undo the fastening device according to the invention by using a specially adapted screwdriver for turning the locking screw 5 in the opposite direction (normally counter-clockwise) to the locking one. This second tool could be a smaller screwdriver than the first tool needed to undo the screw 1, and could be of a standard type or of the special type described above, depending on the security level required and built into the locking arrangement of the fastening device according to the invention.

When the service mechanic has undone the screw 5 a certain number of turns, the screw head has released the latch bolt 4 so that it may move a certain axial distance, sufficient to allow the locking stud 7 to run into the locking recess 13 and lock the cartridge 3. Most likely, however, the locking stud 7 and the recess 13 will not be aligned with regard to shape or position, as somebody might have tried to undo the screw 1, thereby rotating the cartridge 3 and the latch bolt 4 relative to the exterior casing. This will then instead result in the locking screw 5 being displaced upwards in Fig. 1 and receiving a corresponding axial clearance between its head and the bottom of the hole in the cartridge 3. The service mechanic will also notice this because the screwdriver shaft will be displaced outwards in the hole 11 during the operation. The locking stud 7 on the latch bolt 4 will now be lying with its end face abutting the interior end face of the exterior casing 12 comprising the locking recess 13, under bias from the spring 6.

The service mechanic will now use his first tool and turn the screw 1 in an undoing direction (typically counter-clockwise). The cartridge 3 and the latch bolt 4 will follow the rotation of the screw 1 until the locking stud 7 arrives at a shape or turning position where it fits into the locking recess 13, and snaps right into the recess due to the spring bias. The service mechanic will her a small click, indicating that the locking stud has locked the cartridge, and he can then undo the screw 1 in the normal manner.

The present invention thus provides a fastening device comprising a locking arrangement that can be produced with a flexible security level, from high security to very high security depending on the various optional embodiments described above, and which can also be easily adapted to different dimensions of the male element 1. The union might conceivably be embodied in another manner than by means of a screw 1 and a nut 2, for example with a bayonet mount or similar, which also requires a turning motion to be dismantled. The two elements of a closed structure do not have to be a container and a cover, or to have any specified shape. The latch bolt 4 does not need to be spring loaded, but could be displaced solely by means of a screw 5, axially affixed in a suitable manner in the cartridge 3. The locking stud 7 could be a separate component having a radial locking motion caused by an axial displacement of a conical latch bolt 4, etc. Furthermore, the first and second tools discussed above could be combined into one single special tool, for the embodiment according to Fig. 1.

## Claims

1. A fastening device for holding together two components of an arbitrarily shaped, closed structure (20, 22) said fastening device comprising a male fastening element (1) and a female fastening element (2), said elements fitting into each other for creating a union through relative motion between the male and the female elements (1,2), and a locking arrangement (3, 4, 5, 6, 7, 13) for said union, wherein the male element (1) is easily accessible from the outside for a movement by means of a first tool, with the intention of joining or dismantling the union between the male and female elements (1,2), whereas the female element (2) is inaccessibly located inside the closed structure, and wherein said female element (2) is free to move together with the male element, when it is not locked in position by said internally located locking arrangement (3, 4, 5, 6, 7, 13) because the resistance against relative rotation between the male and the female elements (1, 2) is higher than that between the female element (2) and the stationary portion of the locking arrangement, thereby preventing the union from being dismantled or joined, said locking arrangement (3, 4, 5, 6, 7, 13) being arranged to selectively lock the female element (2) in relation to, or to release it for movement together with, the male element (1), whereby said locking or releasing of the female element (2) is achieved through an external influence, **characterised by** said external influence being a rotational movement, by means of a second tool, of a rotatable component (5) within said locking arrangement, thereby either causing a locking stud (7) of a latch bolt (4) in the locking arrangement (3, 4, 5, 6, 7, 13) to be displaced so as to engage a locking recess (13) in a stationary component (12) preventing said locking arrangement (3, 4, 5, 6, 7, 13) and its attached or integrated female element (2) to further follow the movement of the male element (1), or causing said locking stud (7) to be displaced out of said engagement, depending on the direction of rotation, said rotatable component (5) of the locking arrangement (3,4,5,6,7,13) being located out of sight and difficult to access inside a small hole (11) in the closed structure.

2. The fastening device according to claim 1, **characterised in that** said component (5) is a locking screw a locking influencing the movement of said locking stud (7) on the latch bolt (4) of the locking arrangement, whereby said second tool consists of a screwdriver or similar tool with a shaft, for tightening and undoing of screws.

3. The fastening device according to claim 2, **characterised by** said female element (2) and locking arrangement (3, 4, 5, 6, 7) being integrated with/built into a cylindrical cartridge (3) in a rotationally locked manner relative thereto, where only the locking stud (7) on the latch bolt (4) extends outside the cylindrical cartridge in its locking position, and in doing so will prevent said cartridge from turning, where the male element (1), in order to be joined with the female element (2), is inserted into one end wall of the cartridge, and by a hole (11) for accessing said internally located locking screw (5), which influences the movement of said locking stud (7) on the latch bolt (4) of the locking arrangement, being arranged along the centreline of the cylindrical cartridge (3).

4. The fastening device according to claim 3, **characterised by** said male element (1) being a screw and by said attached female element (2) being a nut or a nut-like component rotationally locked into said cartridge (3) with its centreline arranged concentrically with that of the cartridge, or by said alternative integrated female element (2) consisting of a thread in the centre of one end wall of said cartridge, and by said first tool being intended for tightening and undoing of screws.

5. The fastening device according to claim 4, **characterised by** said hole (11) for accessing said internally located locking screw (5), which influences the move ment of said locking stud (7) on the latch bolt (4) of the locking arrangement, further being arranged through the screw (1), along its centreline.

6. A fastening device according to claims 1-3, **characterised by** the locking movement of said locking stud (7) on the latch bolt (4) taking place outwardly, in the axial direction, from the other end wall of the cylindrical cartridge, opposite the one where the male element (1) is inserted, whereby the rotational locking is achieved through shape-locking between the locking stud and a fixedly arranged, matingly designed locking recess (13), in which the locking stud is received.

7. A fastening device according to claims 1-3, **characterised by** the locking movement of said locking stud (7) on the latch bolt (4) taking place outwardly, in the axial direction, from the other end wall of the cylindrical cartridge, opposite the one where the male element (1) is inserted, whereby the rotational locking is achieved through the locking stud, and the corresponding, fixedly arranged locking recess (13), in which the locking stud is received, are located eccentrically in relation to the rotational centreline of the cylindrical cartridge (3).

8. A fastening device according to claims 1-3, **characterised by** said latch bolt (4) being spring biased towards its locking position, and being withdrawn, by said locking screw (5), to a non-locking position when the locking screw is turned in a first direction, and being released into a spring-biased stand-by position when the locking screw is turned in a second, opposite direction.

9. A fastening device according to claims 1-3, **characterised by** said latch bolt (4) being spring biased towards its non-locking position, and being withdrawn, by said locking screw (5), to a locking position when the locking screw is turned in a first direction, and being allowed to move into a non-locking position when the locking screw is turned in a second, opposite direction.

10. A fastening device according to any one of the claims 1-3, **characterised by** the locking arrangement (3, 4, 5, 6, 7, 13) locking the female element (2), and/or the surrounding cylindrical cartridge (3) in which said element is non-rotatingly arranged, against rotation directly in the stationary body of the closed structure (20).

11. A fastening device according to any one of the claims 1-3, **characterised by** the locking arrangement (3, 4, 5, 6, 7, 13) locking the female element (2), and/or the surrounding cylindrical cartridge (3) in which said element is non-rotatingly arranged, against rotation in an exterior casing (12) adapted for attachment into the closed structure (20).

12. A fastening device according to any one of the claims 2-5, **characterised by** said screwdriver-like tool required in order to influence said locking screw (5) in the locking arrangement has such dimensions with regard to length and/or shaft diameter and/or shaft cross-section shape, that the locking screw will not be accessible with standard tools.

13. The fastening device according to claim 12, **characterised by** said screwdriver-like tool required in order to influence said locking screw (5) in the locking arrangement must pass, with its shaft, through an obstacle in the form of a rotatable but axially fixed body (30) having a central aperture with a special cross-section shape, located between said small hole (11) in the closed structure and the head of said locking screw, whereby the shaft cross-section of said screwdriver-like tool is provided with a mating shape.

14. A fastening device according to any one of the claims 2-5, **characterised by** a view obstruction (32) being located between said hole (11) in the closed structure and the locking screw (5), preventing a view, through the hole, towards the head of said locking screw.

15. A fastening device according to any one of the claims 1-4, **characterised by** the resistance against rotary motion between the male element (1) and the female element (2) is raised by means of a friction-raising component.

16. A fastening device according to any one of the claims 3 through 5,12 or 13, **characterised by** said first tool and said second tool being integrated into one special tool.

## Patentansprüche

1. Befestigungsvorrichtung zum Zusammenhalten zweier Bauteile mit einem beliebig geformten, geschlossenen Aufbau (20, 22), wobei die Befestigungsvorrichtung ein Steckerbefestigungselement (1) und ein Buchsenbefestigungselement (2), wobei die Elemente zum Schaffen einer Verbindung durch Bewegen der Stecker- und der Buchsenelemente (1, 2) zueinander ineinander passen, sowie eine Feststellanordnung (3, 4, 5, 6, 7, 13) für die Verbindung aufweist, wobei das Steckerelement (1) einfach von außen zum Bewegen mittels eines ersten Werkzeugs mit dem Zweck, die Verbindung zwischen den Stecker- und den Buchsenelementen (1, 2) zu verbinden oder zu trennen, zugänglich ist, wobei das Buchsenelement (2) unzugänglich innerhalb des geschlossenen Aufbaus angeordnet ist und wobei das Buchsenelement (2) frei für eine Bewegung zusammen mit dem Steckerelement ist, wenn es nicht in Stellung durch die innerhalb angeordnete Feststellanordnung (3, 4, 5, 6, 7, 13) festgestellt ist, da der Widerstand gegen eine relative Drehung zwischen dem Stecker- und dem Buchsenelement (1, 2) größer ist als der zwischen dem Buchsenelement (2) und einem stationären Abschnitt der Feststellanordnung zum Verhindern eines Trennens oder Verbindens der Verbindung, wobei die Feststellanordnung (3, 4, 5, 6, 7, 13) zum wahlweisen Feststellen des Buchsenelements (2) bezogen auf das Steckerelement (1) oder zum Freigeben für eine Bewegung zusammen mit dem Steckerelement (1) angeordnet ist, wobei das Feststellen oder Freigeben des Buchsenelements (2) durch äußere Einwirkung erreichbar ist,
**dadurch gekennzeichnet,**
**dass** die äußere Einwirkung als Drehbewegung eines drehbaren Bauteils (5) innerhalb der Feststellanordnung mittels eines zweiten Werkzeugs ausgebildet ist, wodurch ein Verlagern eines Feststellgewindebolzens (7) eines Verschlussbolzens (4) in der Feststellanordnung (3, 4, 5, 6, 7, 13) derart möglich ist, dass dieser mit einer Feststellausnehmung (13) in dem stationären Bauteil (12) in Eingriff gelangt zum Verhindern, dass die Feststellanordnung (3, 4, 5, 6, 7, 13) und das mit dieser verbundene oder in diese integrierte Buchsenelement (2) der Bewegung des Steckerelements (1) nachfolgt, oder ein Verlagern des Feststellgewindebolzens (7) aus dem Eingriff heraus entsteht, abhängig von der Drehrichtung, wobei das drehbare Bauteil (5) der Feststellanordnung (3, 4, 5, 6, 7, 13) außer Sicht und schwierig zugänglich innerhalb eines kleinen Lochs (11) des geschlossenen Aufbaus angeordnet ist.

2. Befestigungsvorrichtung nach Anspruch 1, **dadurch gekennzeichnet, dass** das Bauteil (5) eine Feststellschraube aufweist, welche auf die Bewegung des Feststellgewindebolzens (7) an dem Verschlussbolzen (4) der Feststellanordnung einwirkt, wobei das zweite Werkzeug einen Schraubenzieher oder ein ähnliches Werkzeug mit einer Welle zum Anziehen und Lösen von Schrauben aufweist.

3. Befestigungsvorrichtung nach Anspruch 2, **dadurch gekennzeichnet, dass** die Befestigungsbuchse (2) und die Feststellanordnung (3, 4, 5, 6, 7) in Drehrichtung festgestellt in einem zylindrischen Einsatz (3) integriert/eingebaut sind, wobei lediglich der Feststellgewindebolzen (7) an dem Verschlussbolzen (4) sich außerhalb des zylindrischen Einsatzes in seiner festgestellten Stellung erstreckt und **dadurch** ein Drehen des Einsatzes verhindert, wobei das Steckerelement (1) zum Verbinden mit dem Buchsenelement (2) in eine Abschlusswand des Einsatzes einsetzbar ist, und dass das Loch (11) für einen Zugang zu der innerhalb angeordneten Feststellschraube (5), welche auf die Bewegung des Feststellgewindebolzens (7) an dem Verschlussbolzen (4) der Feststellanordnung einwirkt, auf einer Mittellinie des zylindrischen Einsatzes (3) angeordnet ist.

4. Befestigungsvorrichtung nach Anspruch 3, **dadurch gekennzeichnet, dass** das Steckerelement (1) als Schraube, und dass das befestigte Buchsenelement (2) als Mutter oder mutterähnliches Bauteil ausgebildet ist, welches drehgesperrt in dem Einsatz (3) vorgesehen ist, wobei dessen Mittellinie konzentrisch zu der des Einsatzes angeordnet ist, oder dass das alternative integrierte Buchsenelement (2) ein Gewinde in der Mitte einer Abschlusswand des Einsatzes aufweist, und dass das erste Werkzeug zum Anziehen und Lösen von Schrauben vorgesehen ist.

5. Befestigungsvorrichtung nach Anspruch 4, **dadurch gekennzeichnet, dass** das Loch (11) für einen Zugang zu der innerhalb angeordneten Feststellschraube (5), welche auf die Bewegung des Feststellgewindebolzens (7) an dem Verschlussbolzen (4) der Feststelleinrichtung einwirkt, weiterhin durch die Schraube (1) entlang seiner Mittellinie angeordnet ist.

6. Befestigungsvorrichtung nach den Ansprüchen 1 bis 3, **dadurch gekennzeichnet, dass** die Feststellbewegung des Feststellgewindebolzens (7) an dem Verschlussbolzen (4) nach außen hin in axiale Richtung weg von der anderen Abschlusswand des zylindrischen Einsatzes stattfindet, gegenüber derjenigen, in welche das Steckerelement (1) eingesetzt ist, wodurch ein Feststellen der Drehung durch Formschluss zwischen dem Feststellgewindebolzen und einer fest angeordneten, korrespondierend ausgebildeten Feststellausnehmung (13), in welcher der Feststellgewindebolzen aufgenommen wird, möglich ist.

7. Befestigungsvorrichtung nach den Ansprüchen 1 bis 3, **dadurch gekennzeichnet, dass** die Feststellbewegung des Feststellgewindebolzens (7) an dem Verschlussbolzen (4) nach außen hin in axialer Richtung weg von der anderen Abschlusswand des zylindrischen Einsatzes stattfindet, gegenüber derjenigen, durch welche das Steckerelement (1) eingesetzt ist, wodurch die Feststellung der Drehung durch den Feststellgewindebolzen möglich ist, und die entsprechende fest angeordnete Feststellausnehmung (13), in welcher der Feststellgewindebolzen aufnehmbar ist, exzentrisch relativ zu der Rotationsmittellinie des zylindrischen Einsatzes (3) angeordnet ist.

8. Befestigungsvorrichtung nach den Ansprüchen 1 bis 3, **dadurch gekennzeichnet, dass** der Verschlussbolzen (4) zu seiner Feststellposition hin federvorgespannt ist und durch die Feststellschraube (5) in eine Nicht-Feststellstellung zurückziehbar ist, wenn die Feststellschraube in eine erste Richtung gedreht ist und in eine federvorgespannte Wartestellung freigegeben ist, wenn die Feststellschraube in eine zweite, entgegengesetzte Richtung gedreht ist.

9. Befestigungsvorrichtung nach den Ansprüchen 1 bis 3, **dadurch gekennzeichnet, dass** der Verschlussbolzen (4) in seine Nicht-Feststellstellung hin federvorgespannt ist, und durch die Feststellschraube (5) in eine Feststellstellung zurückziehbar ist, wenn die Feststellschraube in eine erste Richtung gedreht ist, und eine Bewegung in eine Nicht-Feststellstellung freigebbar ist, wenn die Feststellschraube in eine zweite, entgegengesetzte Richtung gedreht ist.

10. Befestigungsvorrichtung nach einem der Ansprüche 1 bis 3, **dadurch gekennzeichnet, dass** die Feststellanordnung (3, 4, 5, 6, 7, 13) das Buchsenelement (2) und/oder den umgebenden zylindrischen Einsatz (3), in welcher das Element nicht drehbar angeordnet ist, direkt in dem stationären Bauteil des geschlossenen Aufbaus (20) gegen ein Drehen feststellt.

11. Befestigungsvorrichtung nach einem der Ansprüche 1 bis 3, **dadurch gekennzeichnet, dass** die Feststellanordnung (3, 4, 5, 6, 7, 13) das Buchsenelement (2) und/oder den umgebenden zylindrischen Einsatz (3), in welchem das Element nicht drehbar angeordnet ist, gegen eine Drehung in einem äußeren Gehäuse (12), welches zum Befestigen innerhalb des geschlossenen Aufbaus (20) angepasst ist, feststellt.

12. Befestigungsvorrichtung nach einem der Ansprüche 2 bis 5, **dadurch gekennzeichnet, dass** das schraubenzieherähnliche Werkzeug, welches zum Wirken auf die Feststellschraube (5) in der Feststellanordnung benötigt ist, derartige Maße in Bezug auf seine Länge und/oder Wellendurchmesser und/oder Wellenquerschnittsform aufweist, dass die Feststellschraube nicht mittels Standardwerkzeugen zugänglich ist.

13. Befestigungsvorrichtung nach Anspruch 12, **dadurch gekennzeichnet, dass** das schraubenzieherähnliche Werkzeug, welches zum Einwirken auf die Feststellschraube (5) in der Feststellanordnung erforderlich ist, mit seiner Welle durch ein Hindernis in der Form eines drehbaren aber axial festen Bauteils (30) hindurchführbar ist, welches eine mittige Öffnung mit einer speziellen Querschnittsform aufweist, wobei das Hindernis zwischen dem kleinen Loch (11) in dem geschlossenen Aufbau und dem Kopf der Feststellschraube angeordnet ist, wodurch der Wellenquerschnitt des schraubenzieherähnlichen Werkzeugs mit einer korrespondierenden Form vorgesehen ist.

14. Befestigungsvorrichtung nach einem der Ansprüche 2 bis 5, **dadurch gekennzeichnet, dass** ein Sichthindernis (32) in dem Loch (11) in dem geschlossenen Aufbau und der Feststellschraube (5) angeordnet ist, wodurch ein Blick durch das Loch auf den Kopf der Feststellschraube verhindert ist.

15. Befestigungsvorrichtung nach einem der Ansprüche 1 bis 4, **dadurch gekennzeichnet, dass** der Widerstand gegen eine Drehbewegung des Steckerelements (1) zu dem Buchsenelement (2) durch ein eine Reibung erhöhendes Bauteil aufbringbar ist.

16. Befestigungsvorrichtung nach einem der Ansprüche 3 bis 5, 12 oder 13, **dadurch gekennzeichnet, dass** das erste Werkzeug und das zweite Werkzeug in ein spezielles Werkzeug integrierbar sind.

## Revendications

1. Dispositif de fixation pour maintenir ensemble deux composants d'une structure fermée, formée de manière arbitraire (20, 22), ledit dispositif de fixation comportant un élément de fixation mâle (1) et un élément de fixation femelle (2), lesdits éléments s'insérant l'un dans l'autre pour créer un raccord par l'intermédiaire d'un mouvement relatif entre les éléments mâle et femelle (1, 2), et un agencement de blocage (3, 4, 5, 6, 7, 13) pour ledit raccord, dans lequel l'élément mâle (1) est facilement accessible à partir de l'extérieur pour un mouvement au moyen d'un premier outil, dans l'intention d'assembler ou de démonter le raccord entre les éléments mâle et femelle (1, 2), alors que l'élément femelle (2) est positionné de manière inaccessible à l'intérieur de la structure fermée, et dans lequel ledit élément femelle (2) est libre de se déplacer en association avec l'élément mâle, lorsqu'il n'est pas bloqué en position par ledit agencement de blocage positionné à l'intérieur (3, 4, 5, 6, 7, 13) car la résistance contre une rotation relative entre les éléments mâle et femelle (1, 2) est plus grande que celle entre l'élément femelle (2) et la partie fixe de l'agencement de blocage, en empêchant ainsi le raccord d'être démonté ou assemblé, ledit agencement de blocage (3, 4, 5, 6, 7, 13) étant agencé pour bloquer de manière sélective l'élément femelle (2) par rapport à l'élément mâle (1), ou pour le libérer pour un mouvement conjoint avec celui-ci, de sorte que ledit blocage ou ladite libération de l'élément femelle (2) est obtenu par l'intermédiaire d'une influence extérieure, **caractérisé en ce que** ladite influence extérieure est un mouvement de rotation, au moyen d'un second outil, d'un composant rotatif (5) à l'intérieur dudit agencement de blocage, en amenant ainsi un téton de blocage (7) d'un boulon de verrouillage (4) dans l'agencement de blocage (3, 4, 5, 6, 7, 13) à être déplacé de manière à venir en contact avec un évidement de blocage (13) dans un composant fixe (12), en empêchant ledit agencement de blocage (3, 4, 5, 6, 7, 13) et son élément femelle fixé ou intégré (2) de suivre également le mouvement de l'élément mâle (1), ou en amenant ledit téton de blocage (7) à être déplacé pour supprimer ledit contact, en fonction du sens de rotation, ledit composant rotatif (5) de l'agencement de blocage (3, 4, 5, 6, 7, 13) étant positionné hors de vue et étant difficile à atteindre à l'intérieur d'un petit trou (11) dans la structure fermée.

2. Dispositif de fixation selon la revendication 1, **caractérisé en ce que** ledit composant (5) est une vis de blocage qui influence le mouvement dudit téton de blocage (7) sur le boulon de verrouillage (4) de l'agencement de blocage, de sorte que ledit second outil est constitué d'un tournevis ou d'un outil similaire ayant une tige, pour serrer et desserrer des vis.

3. Dispositif de fixation selon la revendication 2, **caractérisé en ce que** ledit élément femelle (2) et ledit agencement de blocage (3, 4, 5, 6, 7, 13) sont intégrés/fabriqués dans une cartouche cylindrique (3) de manière bloquée en rotation par rapport à celle-ci, lorsque seul le téton de blocage (7) sur le boulon de verrouillage (4) s'étend à l'extérieur de la cartouche cylindrique dans sa position de blocage, et ce faisant empêchera ladite cartouche de tourner, où l'élément mâle (1), afin d'être assemblé avec l'élément femelle (2), est introduit dans une paroi d'extrémité de la cartouche, et **en ce qu'**un trou (11) pour accéder à ladite vis de blocage positionnée à l'intérieur (5), qui influence le mouvement dudit téton de blocage (7) sur le boulon de verrouillage (4) de l'agencement de blocage, est agencé le long de l'axe de la cartouche cylindrique (3).

4. Dispositif de fixation selon la revendication 3, **caractérisé en ce que** ledit élément mâle (1) est une vis, et **en ce que** ledit élément femelle fixé (2) est un écrou ou un composant analogue à un écrou bloqué en rotation dans ladite cartouche (3) en ayant son axe agencé de manière concentrique à celui de la cartouche, ou **en ce que** ledit élément femelle intégré en variante (2) est constitué d'un filetage au centre d'une paroi d'extrémité de ladite cartouche, et **en ce que** ledit premier outil est prévu pour serrer et desserrer des vis.

5. Dispositif de fixation selon la revendication 4, **caractérisé en ce que** ledit trou (11) pour accéder à ladite vis de blocage positionnée à l'intérieur (5), qui influence le mouvement dudit téton de blocage (7) sur le boulon de verrouillage (4) de l'agencement de blocage, est également agencé à travers la vis (1), le long de son axe.

6. Dispositif de fixation selon les revendications 1 à 3, **caractérisé en ce que** le mouvement de blocage dudit téton de blocage (7) sur le boulon de verrouillage (4) se produit vers l'extérieur, dans la direction axiale, à partir de l'autre paroi d'extrémité de la cartouche cylindrique, opposée à celle où l'élément mâle (1) est introduit, de sorte que le blocage en rotation est réalisé par l'intermédiaire d'un blocage de forme entre le téton de blocage et un évidement de blocage conçu de manière conjuguée, agencé de manière fixe (13), dans lequel le téton de blocage est reçu.

7. Dispositif de fixation selon les revendications 1 à 3, **caractérisé en ce que** le mouvement de blocage dudit téton de blocage (7) sur le boulon de verrouillage (4) se produit vers l'extérieur, dans la direction axiale, à partir de l'autre paroi d'extrémité de la cartouche cylindrique, opposée à celle où l'élément mâle (1) est introduit, de sorte que le blocage en rotation est réalisé par l'intermédiaire du téton de blocage, et l'évidement de blocage agencé de manière fixe, correspondant (13), dans lequel le téton de blocage est reçu, est positionné de manière excentrée par rapport à l'axe de rotation de la cartouche cylindrique (3).

8. Dispositif de fixation selon les revendications 1 à 3, **caractérisé en ce que** ledit boulon de verrouillage (4) est rappelé par ressort en direction de sa position de blocage et est retiré, par ladite vis de blocage (5), jusqu'à une position non bloquante lorsque la vis de blocage est tournée dans un premier sens, et est libéré dans une position de repos rappelée par ressort lorsque la vis de blocage est tournée dans un second sens opposé.

9. Dispositif de fixation selon les revendications 1 à 3, **caractérisé en ce que** ledit boulon de verrouillage (4) est rappelé par ressort en direction de sa position non bloquante et est retiré, par ladite vis de blocage (5), jusqu'à une position de blocage lorsque la vis de blocage est tournée dans un premier sens, et est autorisé à être amené dans une position non bloquante lorsque la vis de blocage est tournée dans un second sens opposé.

10. Dispositif de fixation selon l'une quelconque des revendications 1 à 3, **caractérisé en ce que** l'agencement de blocage (3, 4, 5, 6, 7, 13) bloque l'élément femelle (2), et/ou la cartouche cylindrique périphérique (3) dans laquelle ledit élément est agencé de manière non rotative, contre une rotation directement dans le corps fixe de la structure fermée (20).

11. Dispositif de fixation selon l'une quelconque des revendications 1 à 3, **caractérisé en ce que** l'agencement de blocage (3, 4, 5, 6, 7, 13) bloque l'élément femelle (2), et/ou la cartouche cylindrique périphérique (3) dans laquelle ledit élément est agencé de manière non rotative, contre une rotation dans un carter extérieur (12) adapté pour une fixation dans la structure fermée (20).

12. Dispositif de fixation selon l'une quelconque des revendications 2 à 5, **caractérisé en ce que** ledit outil analogue à un tournevis requis afin d'influencer ladite vis de blocage (5) dans l'agencement de blocage a de telles dimensions en ce qui concerne une longueur et/ou un diamètre de tige et/ou une forme de tige en coupe transversale, que la vis de blocage ne sera pas accessible à l'aide d'outils standard.

13. Dispositif de fixation selon la revendication 12, **caractérisé en ce que** ledit outil analogue à un tournevis requis afin d'influencer ladite vis de blocage (5) dans l'agencement de blocage doit passer, avec sa tige, à travers un obstacle ayant la forme d'un corps rotatif mais axialement fixe (30) ayant une ouverture centrale de forme spéciale en coupe transversale, positionné entre ledit petit trou (11) dans la structure fermée et la tête de ladite vis de blocage, de sorte que la section transversale de tige dudit outil analogue à un tournevis a une forme conjuguée.

14. Dispositif de fixation selon l'une quelconque des revendications 2 à 5, **caractérisé en ce qu'**un obstacle à la vue (32) est positionné entre ledit trou (11) dans la structure fermée et la vis de blocage (5), en empêchant une vue, à travers le trou, en direction de la tête de ladite vis de blocage.

15. Dispositif de fixation selon l'une quelconque des revendications 1 à 4, **caractérisé en ce que** la résistance contre un mouvement rotatif entre l'élément mâle (1) et l'élément femelle (2) est augmentée au moyen d'un composant augmentant le frottement.

16. Dispositif de fixation selon l'une quelconque des revendications 3 à 5, 12 ou 13, **caractérisé en ce que** ledit premier outil et ledit second outil sont intégrés dans un seul outil spécial.
